# EUROPÄISCHE PATENTANMELDUNG

(11) **EP 3 739 834 A1**
(43) Veröffentlichungstag der Anmeldung: **18.11.2020**
(21) Anmeldenummer: 19174011.7
(22) Anmeldetag: 13.05.2019
(51) Int. Cl.: H04L 29/06, H04L 9/32

(54) **VERFAHREN, VORRICHTUNG UND ANORDNUNG ZUM VERARBEITEN VON DATEN**

(71) Anmelder: Siemens Aktiengesellschaft, 80333 München (DE)
(72) Erfinder: Eckl, Roland, 91301 Forchheim (DE); Herberth, Harald, 90522 Oberasbach (DE)

(57) **Zusammenfassung**

Es wird ein Verfahren zum Verarbeiten von Daten eines lokalen Systems und eines externen Systems umfassend eine Anzahl von Applikationen vorgeschlagen, mit:
Anmelden an dem lokalen System mittels einer ersten Authentifizierungs-Einheit unter Verwendung einer ersten Anmeldeinformation eines ersten Accounts,
Anmelden an dem externen System mittels einer zweiten Authentifizierungs-Einheit unter Verwendung einer zweiten Anmeldeinformation eines zweiten Accounts,
Erzeugen eines Berechtigungsnachweises für den zweiten Account in Abhängigkeit des Anmeldens an der zweiten Authentifizierungs-Einheit,
Übermitteln des erzeugten Berechtigungsnachweises an das lokale System,
Koppeln des übermittelten Berechtigungsnachweises mit dem ersten Account, und
Erneutes Anmelden an dem lokalen System mittels der ersten Authentifizierungs-Einheit mittels der ersten Anmeldeinformation des ersten Accounts und Zugreifen auf eine bestimmte Applikation des externen Systems über einen die bestimmte Applikation bereitstellenden Server und über eine dem Server zugeordnete Kommunikationsschnittstelle unter Verwendung des mit dem ersten Account gekoppelten Berechtigungsnachweises.

## Beschreibung

Die vorliegende Erfindung betrifft ein Verfahren sowie ein Computerprogrammprodukt zum Verarbeiten von Daten. Weiterhin betrifft die vorliegende Erfindung eine Vorrichtung zum Verarbeiten von Daten sowie eine Anordnung mit der Vorrichtung.

Das technische Gebiet der Erfindung betrifft die Verarbeitung von Daten, insbesondere die Verarbeitung von Daten mittels eines lokalen Systems umfassend eine Anzahl von Kommunikationsschnittstellen und mittels eines externen Systems umfassend eine Anzahl von Servern und eine Anzahl von Applikationen.

Für gewöhnlich werden in technischen Systemen zentrale Authentifizierungssysteme verwendet, welche stellvertretend ein Anmelden eines Benutzers an verschiedenen Applikationen des technischen Systems erlauben. Solche zentralen Authentifizierungssysteme unterstützen dabei herkömmlicherweise eine Single-Sign-On (SSO, Einmalanmeldung), damit sich der Benutzer nur einmalig an dem zentralen Authentifizierungssystem anzumelden hat und somit nachfolgend auf verschiedene am zentralen Authentifizierungssystem teilnehmende Applikationen Zugriff hat, ohne dass eine erneute Authentifizierung des Benutzers erforderlich ist.

Für die Implementierung eines Zugriffs des Benutzers über mehrere Authentifizierungssysteme hinweg, wie beispielsweise von einem ersten Authentifizierungssystem auf eine Applikation eines zweiten Authentifizierungssystems, gibt es verschiedene Möglichkeiten:
Eine erste Möglichkeit ist die Realisierung mittels eines Authentifizierungs-Proxys. Bei dieser ersten Möglichkeit meldet sich der Benutzer am Authentifizierungs-Proxy an und der Authentifizierungs-Proxy selbst sichert wiederum die dahinterliegende Applikation ab. Nach erfolgreicher Anmeldung werden die Anmeldeinformationen des Benutzers an die Applikation übermittelt. Nun kann der Benutzer auf die dahinterliegenden Applikationen über den Authentifizierungs-Proxy zugreifen. Bei dieser Möglichkeit findet jedoch lediglich eine einmalige Anmeldung an dem Authentifizierungs-Proxy statt, worüber dann der Benutzer auf die Applikation des zweiten Authentifizierungssystems zugreifen kann.

Bei der zweiten Möglichkeit werden mehrere Authentifizierungssysteme kombiniert, wobei diese Kombination auch als Föderation bezeichnet werden kann. Hierbei werden die Benutzer-Identitäten, also der erste Account und der zweite Account eines Benutzers, über mehrere Authentifizierungssysteme hinweg aufeinander abgebildet, wobei zwischen den mehreren Authentifizierungssystemen eine Vertrauensbeziehung besteht. Bei der Föderation übernimmt dabei eines der Authentifizierungssysteme die Führung. Das nicht-führende Authentifizierungssystem ist insbesondere in der Lage, dem führenden Authentifizierungssystem zu vertrauen und die Echtheit des Authentifizierungsergebnisses zu validieren.

Bei der zweiten Möglichkeit benötigt der Benutzer jedoch a-priori Informationen darüber, auf welche Applikationen er zugreifen will. Wenn sich außerdem der Benutzer beispielsweise zuerst bei dem nicht-führenden Authentifizierungssystem einloggt, ist kein SSO mit den Applikationen möglich, die mit dem führenden System verknüpft sind. Ferner entsteht ein zusätzlicher Konfigurationsaufwand durch den Systemadministrator, da eine Erzeugung und eine Verteilung von Schlüsselmaterial für beide Authentifizierungssysteme erforderlich sind, um die Vertrauensbeziehung zwischen beiden Authentifizierungssystemen zu etablieren und überprüfbar zu machen.

Vor diesem Hintergrund besteht eine Aufgabe der vorliegenden Erfindung darin, Mittel bereitzustellen, um den Zugriff auf Daten zu verbessern.

Gemäß einem ersten Aspekt wird ein Verfahren zum Verarbeiten von Daten eines lokalen Systems umfassend eine Anzahl K von Kommunikationsschnittstellen und eines externen Systems umfassend eine Anzahl S von Servern und eine Anzahl A von Applikationen vorgeschlagen, wobei jede der A Applikationen mittels eines der S Server bereitgestellt wird und jede der K Kommunikationsschnittstellen einem der S Server zugeordnet ist, mit K ≥ 1, S ≥ 1, A ≥ 1. Das Verfahren umfasst die Schritte:
a) Anmelden an dem lokalen System mittels einer ersten Authentifizierungs-Einheit unter Verwendung einer ersten Anmeldeinformation eines ersten Accounts eines Benutzers,
b) Anmelden an dem externen System mittels einer zweiten Authentifizierungs-Einheit unter Verwendung einer zweiten Anmeldeinformation eines zweiten Accounts des Benutzers,
c) Erzeugen eines Berechtigungsnachweises für den zweiten Account des Benutzers in Abhängigkeit des Anmeldens an der zweiten Authentifizierungs-Einheit,
d) Übermitteln des erzeugten Berechtigungsnachweises an das lokale System,
e) Koppeln des übermittelten Berechtigungsnachweises mit dem ersten Account des Benutzers, und
f) Erneutes Anmelden an dem lokalen System mittels der ersten Authentifizierungs-Einheit unter Verwendung der ersten

Anmeldeinformation des ersten Accounts und Zugreifen auf eine bestimmte Applikation aus den A Applikationen des externen Systems über den die bestimmte Applikation bereitstellenden Server und über die dem Server zugeordnete Kommunikationsschnittstelle unter Verwendung des mit dem ersten Account des Benutzers gekoppelten Berechtigungsnachweises.

Durch das bereitgestellte Verfahren ist es in vorteilhafter Weise möglich, dass der Benutzer, nach einem ersten Anmelden an dem lokalen System und einem ersten Anmelden an dem externen System, mittels des übermittelten Berechtigungsnachweises bei einem erneuten Anmelden an dem lokalen System einen Zugriff auf zumindest eine bestimmte Applikation aus den A Applikationen erhält, ohne dass eine weitere Benutzerinteraktion, wie ein erneutes (zweites) Anmelden an dem externen System, benötigt wird.

Im Detail kann dadurch der Benutzer bei dem erneuten Anmelden durch die Kopplung des übermittelten Berechtigungsnachweises mit dem ersten Account auf die zumindest eine bestimmte Applikation aus den A Applikationen zugreifen. Auch kann der Benutzer aufgrund der Kopplung auf weitere Applikationen des externen Systems zugreifen. Dies erhöht die Benutzerfreundlichkeit, da bei jedem erneuten Zugriff des Benutzers auf Applikationen des externen Systems kein erneutes Anmelden an dem externen System, insbesondere an der zweiten Authentifizierungs-Einheit, benötigt wird.

Ein weiterer Vorteil des bereitgestellten Verfahrens ist es, dass der Konfigurationsaufwand für das Föderieren, also das Kombinieren der ersten Authentifizierungs-Einheit des lokalen Systems mit der zweiten Authentifizierungs-Einheit des externen Systems, entfällt. Hierbei wird kein kryptografisches Schlüsselmaterial erzeugt und installiert. Stattdessen wird eine Vertrauensbeziehung durch die Kopplung direkt und autonom durch den jeweiligen Benutzer mittels der einmaligen Authentifizierung des Benutzers an der zweiten Authentifizierungs-Einheit und anschließendem Ausstellen des Berechtigungsnachweises realisiert. Somit ist hierbei vorteilhafterweise keine zentrale a-priori Konfiguration an der ersten und der zweiten Authentifizierungs-Einheit vorzunehmen.

Weiter vorteilhaft an dem bereitgestellten Verfahren ist es, dass ein Abbilden des ersten Accounts auf den zweiten Account des Benutzers aufeinander entfällt, da der erste Account und der zweite Account automatisch miteinander gekoppelt werden. Dies verringert den Konfigurationsaufwand bei der Verwaltung des Benutzers oder einer Mehrzahl von Benutzern.

Zusätzlich ergibt sich als ein weiterer Vorteil, dass der Benutzer in dem lokalen System als auch in dem externen System die jeweiligen Anmeldeinformationen, also die erste Anmeldeinformation des ersten Accounts und die zweite Anmeldeinformation des zweiten Accounts, abändern kann, ohne dass dabei eine erneute Kopplung erforderlich ist, da der übermittelte Berechtigungsnachweis unabhängig von den jeweiligen eventuellen abgeänderten Anmeldedaten zumindest eine dauerhafte oder zumindest langfristige Authentifizierung für den Benutzer an dem externen System ermöglicht.

Ein weiterer Vorteil des bereitgestellten Verfahrens ist es, dass auch in einem geschlossenen Netzwerk, wie dem lokalen System, welches beispielsweise als Automatisierungsanlage ausgebildet ist, ein kontrollierter Zugriff auf die bestimmte Applikation oder die Applikationen aus diesem lokalen Netzwerk heraus möglich ist, ohne die Sicherheit durch einen freien Internet-Zugriff möglicherweise zu kompromittieren. Das ist deshalb so, da die Kommunikationsschnittstelle als ein Gateway fungiert. Das Gateway kann sicherstellen, dass über das Gateway ausschließlich vertraute und/oder bekannte bestimmte Applikationen für den Benutzer zugreifbar und/oder erreichbar sind. Eine Datenkommunikation mit anderen Servern und/oder Applikationen, welche nicht vertraut und/oder bekannt sind, wird insbesondere durch das Gateway unterbunden. Dies erhöht die Sicherheit bei dem Zugriff auf die zumindest eine bestimmte Applikation.

Das lokale System ist insbesondere ein lokales Netzwerk, das für einen Benutzer verfügbar ist. Insbesondere ist das lokale System im industriellen Umfeld vorhanden und dort beispielsweise als eine Industrieanlage, eine Fabrikanlage oder eine Produktionsstraße ausgebildet. Das lokale System ist insbesondere getrennt von anderen Systemen oder Netzwerken ausgebildet. Somit wird ein Zugriff auf einzelne Geräte innerhalb des lokalen Systems von außen verwehrt. Zusätzlich umfasst das lokale System vorzugsweise eine erste Authentifizierungs-Einheit zur Authentifizierung von zumindest einem Benutzer an dem lokalen System.

Das externe System ist insbesondere als ein System ausgebildet, welches außerhalb des lokalen Systems verfügbar und angeordnet ist. Dies kann ein weiteres externes System sein, wie beispielsweise ein öffentliches Netzwerk, ein lokales Netzwerk oder das Internet. Das externe System ist vorzugsweise als eine Cloud und/oder als zumindest ein Server ausgebildet, wobei die Cloud und/oder der Server zumindest eine bestimmte Applikation umfassen. Wenn das externe System als eine Cloud ausgebildet ist, weist die Cloud insbesondere zumindest einen Server auf, welcher die zumindest eine bestimmte Applikation bereitstellt. Zusätzlich umfasst das externe System eine zweite Authentifizierungs-Einheit zur Authentifizierung von zumindest dem Benutzer an dem externen System, damit der Benutzer auf zumindest eine bestimmte Applikation, welche das externe System umfasst, zugreifen kann.

Ein Account ist insbesondere eine Zugangsberechtigung zu einem zugangsbeschränkten informationstechnischem System (IT-System), wie beispielsweise einem Computer mit Kennwortschutz. Beispielweise authentifiziert sich der Benutzer bei einem Einloggen an dem Computer mit einer Benutzerkennung und einem Passwort. Der Benutzer hat zumindest einen ersten Account und einen zweiten Account. Die jeweilige Anmeldeinformation, also die erste und die zweite Anmeldeinformation, weist jeweils eine Benutzerkennung und ein Passwort für den jeweiligen Account auf. Der Account kann auch als ein Benutzerkonto oder ein Konto bezeichnet werden.

Vorzugsweise meldet sich der Benutzer mit dem ersten Account an dem lokalen System mittels der ersten Authentifizierungs-Einheit unter Verwendung der ersten Anmeldeinformation an. Insbesondere meldet sich der Benutzer ferner mit dem zweiten Account an dem externen System mittels der zweiten Authentifizierungs-Einheit unter Verwendung der zweiten Anmeldeinformation an.

Ein Anmelden umfasst insbesondere ein erstes Einloggen in das lokale System mit dem ersten Account und ein zweites Einloggen in das externe System mit dem zweiten Account.

Das erste Einloggen kann auch als ein erfolgreiches Authentifizieren des ersten Accounts des Benutzers an der ersten Authentifizierungs-Einheit mittels der ersten Anmeldeinformation, wie einer ersten Benutzerkennung und einem ersten Passwort, verstanden werden.

Das zweite Einloggen kann auch als ein erfolgreiches Authentifizieren des zweiten Accounts des Benutzers an der zweiten Authentifizierungs-Einheit mittels der zweiten Anmeldeinformation, wie einer zweiten Benutzerkennung und einem zweiten Passwort, verstanden werden.

Vorzugsweise meldet sich der Benutzer mit seinem ersten Account über einen Browser oder eine Eingabe-Einrichtung mit einer Rechen-Einheit an der ersten Authentifizierungs-Einheit an. Insbesondere meldet sich der Benutzer mit seinem zweiten Account über denselben Browser oder eine Eingabe-Einrichtung mit einer Rechen-Einheit an der zweiten Authentifizierungs-Einheit an. Die Eingabe-Einrichtung mit einer Recheneinheit kann als ein Computer oder als ein mobiles Endgerät wie ein Tablet-PC oder ein Laptop ausgebildet sein.

Die Kommunikationsschnittstelle ist vorzugsweise als ein Proxy (Vermittler) ausgebildet. Die Kommunikationsschnittstelle stellt insbesondere den Übergang von dem lokalen System in das externe System dar. Im vorliegenden Fall ist die Kommunikationsschnittstelle also ein Teil des lokalen Systems, wobei die Kommunikationsschnittstelle das externe System, insbesondere die zweite Authentifizierungs-Einheit, erreichen kann. Die Kommunikationsschnittstelle hat also Zugriff auf das lokale System als auch auf das externe System.

Die Kommunikationsschnittstelle ist insbesondere eine Applikation, die eine Vertrauensbeziehung mit der ersten Authentifizierungs-Einheit aufweist und Zugriff auf dessen Benutzerinformation hat. Der Kommunikationsschnittstelle ist der erste Account des erfolgreich angemeldeten oder eingeloggten Benutzers in dem lokalen System bekannt.

Die Vertrauensbeziehung ("Trust Relation") zwischen zwei Einrichtungen, wie der Kommunikationsschnittstelle und der ersten Authentifizierungs-Einheit, definiert insbesondere ein Vertrauensverhältnis, bei dem zumindest eine der Einrichtungen Zugriff auf die Daten der anderen Einrichtung hat, wobei die Vertrauensbeziehung beispielsweise mittels eines Austauschens von kryptografischem Schlüsselmaterial zwischen den beiden Einrichtungen eingerichtet wird.

Beispielsweise ist die Kommunikationsschnittstelle vor die zumindest eine bestimmte Applikation des externen Systems geschaltet. Dies bedeutet insbesondere, dass der Zugriff von dem lokalen System auf die zumindest eine bestimmte Applikation ausschließlich über die Kommunikationsschnittstelle durchgeführt wird. Die zumindest eine bestimmte Applikation und/oder die Applikationen des externen Systems vertrauen der zweiten Authentifizierungs-Einheit. Somit ist bei einem erfolgreichen Anmelden an der zweiten Authentifizierungs-Einheit ein Zugriff auf die zumindest eine bestimmte Applikation möglich.

Insbesondere existiert zwischen zumindest einem Client, der ersten Authentifizierungs-Einheit und der Kommunikationsschnittstelle jeweils für einen Benutzer eine lokale Session im lokalen System. Eine Session oder eine Sitzung ist insbesondere eine Verbindung zwischen den oben beschriebenen teilnehmenden Einrichtungen. Den Beginn einer Session, wie beispielsweise der lokalen Session, kennzeichnet das Einloggen in das lokale System. Insbesondere wird unter dem zumindest einen Client eine Einrichtung oder ein Endgerät verstanden, welches von einem Benutzer verwendet wird, wie beispielsweise ein Browser, damit der Benutzer Daten von zumindest einem Server erhalten kann. Für jeden Benutzer kann weiterhin eine externe Session gegenüber dem externen System durch Anmelden an der zweiten Authentifizierungs-Einheit eingerichtet werden. Die Kommunikationsschnittstelle verknüpft die lokale und die externe Session. Wird beispielsweise die lokale Session beendet, kann die Kommunikationsschnittstelle automatisch ebenfalls, beispielsweise durch Auflösen der Kopplung der beiden Systeme, die externe Session beenden.

Beispielsweise erhält der Benutzer nach erfolgreicher Authentifizierung an der zweiten Authentifizierungs-Einheit den erzeugten Berechtigungsnachweis von der zweiten Authentifizierungs-Einheit. Vorzugsweise meldet sich der Benutzer einmalig am externen System an und kann fortan auf alle Applikationen des externen Systems durch die Kopplung des ersten Accounts mit dem ausgestellten Berechtigungsnachweis zugreifen.

Eine Applikation ist insbesondere eine Anwendung und/oder eine Anwendungssoftware, welche über das externe System erreichbar ist. Die Applikation ist vorzugsweise ein Computerprogramm, welches benutzt wird, um eine nützliche oder gewünschte nicht-systemtechnische Funktionalität zu bearbeiten oder zu unterstützen. Unter der Verwendung zumindest einer Kommunikationsschnittstelle kann auf die bestimmte Applikation zugegriffen werden. Vorzugsweise ist die bestimmte Applikation einem Server zugeordnet oder über den Server erreichbar. Auch kann ein Server mehrere Applikationen umfassen.

Insbesondere wird das Erzeugen des Berechtigungsnachweises für den zweiten Account des Benutzers in dem Schritt c) ausschließlich durchgeführt, wenn das Anmelden in Schritt b) erfolgreich war, also wenn eine erfolgreiche Authentifizierung mittels der korrekten zweiten Anmeldedaten an der zweiten Authentifizierungs-Einheit erfolgt ist.

Vorzugsweise wird durch das Koppeln in Schritt e) die Kopplung zweier unterschiedlicher Systeme, wie dem lokalen System und dem externen System, erreicht. Hierbei handelt es sich ebenfalls insbesondere um eine Kopplung der ersten Authentifizierungs-Einheit mit der zweiten Authentifizierungs-Einheit unter Verwendung des Berechtigungsnachweises und der Kommunikationsschnittstelle. Die Kopplung wird insbesondere dafür verwendet, um in verschiedenen Umgebungen einen sicheren Datenaustausch zwischen den Umgebungen ohne großen Konfigurationsaufwand der verschiedenen Umgebungen aufeinander zu realisieren. Unter den Begriff "verschiedenen Umgebungen" fallen insbesondere die Industrieanlage und die Cloud, also eine Kopplung zwischen dem lokalen System und dem externen System.

Der Ablauf des wie oben beschriebenen bereitgestellten Verfahrens wird anhand des nachfolgenden Beispiels für einen Benutzer "Max Mustermann" detaillierter erläutert:
Das lokale System ist hierbei als die Industrieanlage ausgebildet und umfasst die erste Authentifizierungs-Einheit. Über diese erste Authentifizierungs-Einheit kann sich der Benutzer mittels seines ersten Accounts und der ersten Anmeldeinformation an dem lokalen System anmelden. Ferner ist die Kommunikationsschnittstelle insbesondere als ein Edge Device ausgebildet. Das externe System ist vorzugsweise als die Cloud ausgebildet und umfasst die zweite Authentifizierungs-Einheit und die zumindest eine bestimmte Applikation.

In einem ersten Schritt will der Benutzer eine Applikation "Foo-bar" über die Adresse der Kommunikationsschnittstelle, also den Zugriff auf die Applikation "Foo-bar" über die Kommunikationsschnittstelle, starten. Dabei treten insbesondere zwei unterschiedliche Fälle auf. Wenn der Benutzer bereits eine lokale Session mit der Kommunikationsschnittstelle und der ersten Authentifizierungs-Einheit aufgebaut hat, entfällt eine erneute Authentifizierung an der ersten Authentifizierungs-Einheit. Falls der Benutzer keine lokale Session aufgebaut hat, ist es erforderlich, dass sich der Benutzer, um eine lokale Session aufzubauen, mittels seines ersten Accounts und seiner ersten Anmeldeinformation an der ersten Authentifizierungs-Einheit erfolgreich anmeldet und sich somit authentifiziert.

Anschließend nimmt die Kommunikationsschnittstelle an der lokalen Session teil und kann den eingeloggten Benutzer als "Max Mustermann" identifizieren.

In einem weiteren Schritt prüft die Kommunikationsschnittstelle, ob eine externe Session an dem externen System mit dem Benutzer "Max Mustermann" verknüpft oder verkoppelt ist.

Falls keine Kopplung vorliegt und/oder der Berechtigungsnachweis ungültig ist, hat sich der Benutzer zunächst mittels seines zweiten Accounts "Maximilian Mustermann" unter Verwendung der zweiten Anmeldeinformation an der zweiten Authentifizierung-Einheit erfolgreich anzumelden und somit zu authentifizieren.

Nach der erfolgreichen Authentifizierung an der zweiten Authentifizierungs-Einheit wird von der zweiten Authentifizierungs-Einheit der Berechtigungsnachweis für den zweiten Account "Maximilian Mustermann" erzeugt.

Anschließend wird der Berechtigungsnachweis mit dem ersten Account "Max Mustermann" gekoppelt.

Wenn sich nun der Benutzer erneut an dem lokalen System mittels seines ersten Accounts "Max Mustermann" anmeldet, erhält er durch die Kopplung automatisch Zugriff auf die zumindest eine bestimmte Applikation des externen Systems, da ein erneutes Anmelden an der zweiten Authentifizierungs-Einheit mittels des zweiten Accounts "Maximilian Mustermann" aufgrund des erzeugten Berechtigungsnachweises entfällt. Der erzeugte Berechtigungsnachweis, welcher auf Basis des erfolgreichen Authentifizierens des zweiten Accounts "Maximilian Mustermann" ausgestellt wird und mit dem ersten Account "Max Mustermann" gekoppelt wird, macht somit das erneute Authentifizieren an der zweiten Authentifizierungs-Einheit zumindest für die Dauer der Gültigkeit des Berechtigungsnachweises obsolet.

Infolgedessen ist der Benutzer durch die Kopplung mittels seines ersten Accounts "Max Mustermann" auch an der zweiten Authentifizierungs-Einheit erfolgreich authentifiziert und es besteht eine externe Session zwischen der Kommunikationsschnittstelle und dem externen System.
Anschließend kann der Benutzer mittels seines ersten Accounts "Max Mustermann" auf die gewünschte Applikation, also die zumindest eine bestimmte Applikation "Foo-Bar", in dem externen System über die Kommunikationsschnittstelle zugreifen und wird am externen System aufgrund der Kopplung als "Maximilian Mustermann" identifiziert.

Insbesondere hat der Benutzer den ersten Account "Max Mustermann" zum Anmelden an dem lokalen System und den zweiten Account "Maximilian Mustermann" zum Anmelden an dem externen System. Somit ist der Benutzer zwar dieselbe Person, jedoch sind der erste und der zweite Account individuell für das jeweilige lokale beziehungsweise externe System ausgebildet.

Gemäß einer Ausführungsform sind die erste Authentifizierungs-Einheit und die zweite Authentifizierungs-Einheit voneinander unabhängig ausgebildet.

Dies hat den Vorteil, dass der Konfigurationsaufwand zur Einrichtung des bereitgestellten Verfahrens gering ist, da keine Konfiguration des jeweiligen Systems in das andere System benötigt wird und lediglich die Kopplung bereitzustellen ist.

Insbesondere hat das lokale System keine Kenntnis über das externe System und umgekehrt, da das lokale und das externe System unabhängig voneinander sind und bleiben. Lediglich durch die Kopplung des Berechtigungsnachweises mit dem ersten Account des Benutzers wird vorzugsweise ermöglicht, dass der Benutzer mittels seines ersten Accounts des lokalen Systems auf Applikationen des externen Systems zugreifen kann.

Das externe System ist vorzugsweise von dem lokalen System getrennt und ist extern zu dem lokalen System angeordnet. Das lokale System kann sich somit an einem Standort A befinden, während sich das externe System an einem Standort B befinden kann. Die Distanz zwischen den beiden Standorten beträgt insbesondere mehrere Meter oder Kilometer.

Gemäß einer weiteren Ausführungsform sind die erste Authentifizierungs-Einheit und die zweite Authentifizierungs-Einheit über zumindest eine der K Kommunikationsschnittstellen gekoppelt.

Insbesondere sind die erste Authentifizierungs-Einheit und die zweite Authentifizierungs-Einheit indirekt über die zumindest eine der K Kommunikationsschnittstellen gekoppelt. Unter der indirekten Kopplung wird vorliegend beispielsweise verstanden, dass zumindest eine weitere Einrichtung, wie eine der K Kommunikationsschnittstellen, zwischen der ersten und der zweiten Authentifizierungs-Einheit zur Kopplung angeordnet ist. Somit besteht vorzugsweise keine direkte Kopplung zwischen der ersten und der zweiten Authentifizierungs-Einheit und die zumindest eine der K Kommunikationsschnittstellen ist zwischen der ersten Authentifizierungs-Einheit und der zweiten Authentifizierungs-Einheit angeordnet.

Gemäß einer weiteren Ausführungsform umfasst das Koppeln in Schritt e) eine Zuweisung von einer Anzahl Z von Zugriffsrechten, mit Z ≥ 1, für den ersten Account des Benutzers mittels des übermittelten Berechtigungsnachweises.

Unter einem Berechtigungsnachweis wird insbesondere ein Zugriffs-Token oder ein "Access-Token" verstanden. Der Berechtigungsnachweis wird insbesondere durch die zweite Authentifizierungs-Einheit erzeugt. Der Berechtigungsnachweis ist vorzugsweise nicht zur ständigen oder wiederholten Eingabe ausgebildet. Es handelt sich bei dem Berechtigungsnachweis vorzugsweise um eine sehr lange und kryptische Zeichenfolge ("Opaque Strings"), welche beispielsweise schwer durch sogenannte Brute-Force-Angriffe oder andere Angriffe zu entschlüsseln oder zu erraten sind. Insbesondere ist der Berechtigungsnachweis hex-codiert, XML-basiert oder als JWT-Webtoken ausgebildet. Insbesondere wird die Verbindung zur Übermittlung des Berechtigungsnachweises an das lokale System mittels "Transport Layer Security" (TLS) oder "Hypertext Transfer Protocol Secure" (HTTPS) verschlüsselt.
Durch das Zugriffsrecht erhält der erste Account des Benutzers insbesondere eine Erlaubnis eines Zugriffs für eine bestimmte Applikation des externen Systems. Beispielsweise umfasst die Kommunikationsschnittstelle die Anzahl Z von Zugriffsrechten für die Anzahl A von Applikationen. Der Berechtigungsnachweis legt vorzugsweise durch die Zuweisung von Zugriffsrechten fest, auf welche Applikationen des externen Systems der Benutzer mit seinem ersten Account zugreifen darf. Somit ist in vorteilhafter Weise ein einfaches Management von Zugriffsrechten für verschiedene Applikationen möglich.

Vorzugsweise ist es möglich, dass der Benutzer mittels des erzeugten Berechtigungsnachweises auch dann noch auf Applikationen des externen Systems Zugriff hat, selbst wenn das vorherige Passwort des zweiten Accounts des Benutzers zwischenzeitlich geändert wurde.

Gemäß einer weiteren Ausführungsform wird dem Berechtigungsnachweis eine befristete oder eine unbefristete Gültigkeitsdauer beim Erzeugen durch die zweite Authentifizierungs-Einheit zugewiesen.

Dies hat den Vorteil, dass festgelegt werden kann, wie lange der Benutzer Zugriff auf eine bestimmte Applikation oder Applikationen des externen Systems hat. Somit sind beispielsweise temporäre Zugriffsrechte realisierbar, was die Flexibilität des lokalen und externen Systems erhöht und das Management von Zugriffsrechten vereinfacht.

Eine befristete Gültigkeitsdauer ist insbesondere eine zeitlich beschränkte Gültigkeitsdauer oder eine temporäre Gültigkeitsdauer. Die befristete Gültigkeitsdauer kann eine Dauer von einer Minute, einer Stunde, eines Tages, einer Woche oder auch andere Gültigkeitsdauern aufweisen.

Der Berechtigungsnachweis wird vorzugsweise mittels der Kommunikationsschnittstelle für die befristete oder unbefristete Gültigkeitsdauer gespeichert. Somit umfasst insbesondere die zumindest eine Kommunikationsschnittstelle auch die Anzahl Z von Zugriffsrechten.

Gemäß einer weiteren Ausführungsform wird der erzeugte Berechtigungsnachweis zusätzlich einem weiteren Account eines weiteren Benutzers zugewiesen.

Insbesondere kann der Benutzer den erzeugten Berechtigungsnachweis auch an einen weiteren Benutzer weitergeben. Dadurch erhält der weitere Benutzer Zugriff auf eine bestimmte oder mehrere Applikationen des externen Systems. Dadurch werden die Flexibilität und die Benutzerfreundlichkeit des lokalen und des externen Systems erhöht.

Der Benutzer kann auch den Berechtigungsnachweis an die Kommunikationsschnittstelle weitergeben, damit die Kommunikationsschnittstelle zu einem Zugriff auf das externe System ermächtigt wird. Somit kann durch ein Anmelden an der Kommunikationsschnittstelle auf die bestimmte Applikation zugegriffen werden. Dies hat den Vorteil, dass dadurch einer Applikation beispielsweise langfristig Zugriff auf das lokale System gewährt werden kann ohne die Zugangsdaten des Benutzers zu offenbaren.

Gemäß einer weiteren Ausführungsform wird der Berechtigungsnachweis spezifisch für den zweiten Account des Benutzers erzeugt und zumindest einem bestimmten Verwendungszweck zugeordnet.

Insbesondere stellt die zweite Authentifizierungs-Einheit nach der erfolgreichen Authentifizierung durch den zweiten Account spezifisch für den zweiten Account des Benutzers den Berechtigungsnachweis aus.

Vorzugsweise wird der Berechtigungsnachweis persistent oder für die Dauer der Gültigkeit mittels der zumindest einen Kommunikationsschnittstelle aus der Anzahl K von Kommunikationsschnittstellen gespeichert.
Gemäß einer weiteren Ausführungsform wird die Kopplung des übermittelten Berechtigungsnachweises mit dem ersten Account des Benutzers zu einem von dem Benutzer gewählten Zeitpunkt aufgelöst.

Hierbei kann der Benutzer die Kopplung jederzeit wieder auflösen, ohne dass dabei ein Zugriff auf die Kommunikationsschnittstelle erfolgt. Insbesondere speichert und verwaltet die Kommunikationsschnittstelle zwar den Berechtigungsnachweis, jedoch akzeptiert das externe System nach einer Loslösung oder eine Auflösung der Kopplung den Berechtigungsnachweis nicht mehr.

Gemäß einer weiteren Ausführungsform weist die Anzahl K von Kommunikationsschnittstellen, mit K ≥ 2, eine Haupt-Kommunikationsschnittstelle und eine mit der Haupt-Kommunikationsschnittstelle verbundene weitere Kommunikationsschnittstelle auf, wobei in dem Schritt d) der erzeugte Berechtigungsnachweis an die Haupt-Kommunikationsschnittstelle des lokalen Systems übermittelt und von der Haupt-Kommunikationsschnittstelle verwaltet wird, wobei die in dem Schritt f) dem Server zugeordnete Kommunikationsschnittstelle die erste Kommunikationsschnittstelle umfasst, wobei der ersten Kommunikationsschnittstelle der erzeugte Berechtigungsnachweis über die Haupt-Kommunikationsschnittstelle bereitgestellt wird und der erzeugte Berechtigungsnachweis von der ersten Kommunikationsschnittstelle benutzt wird.

Der Vorteil dieser Ausführungsform ist, dass bei der Anzahl K von Kommunikationsschnittstellen eine für jede Kommunikationsschnittstelle, wie die erste Kommunikationsschnittstelle, lokale und spezifische Verwaltung des Berechtigungsnachweises für den Benutzer oder die jeweiligen Benutzer entfällt. Infolgedessen wird keine Persistenz oder Speicherung des Berechtigungsnachweises auf der jeweiligen Kommunikationsschnittstelle benötigt, sondern ausschließlich auf der Haupt-Kommunikationsschnittstelle. Dies reduziert die Komplexität des lokalen Systems, vereinfacht die Verwaltung von Kommunikationsschnittstellen und erhöht die Sicherheit.

Insbesondere ist die Haupt-Kommunikationsschnittstelle extern zu jeder weiteren Kommunikationsschnittstelle ausgebildet und verwaltet und speichert die Berechtigungsnachweise für die jeweiligen Benutzer. Dies hat den Vorteil, dass keine tiefe Integration mit der ersten Authentifizierungs-Einheit des lokalen Systems benötigt wird, was wiederrum zu einer erhöhten Flexibilität der Haupt-Kommunikationsschnittstelle führt.

Ein weiterer Vorteil ist, dass der Berechtigungsnachweis verschlüsselt zwischen der Haupt-Kommunikationsschnittstelle und der ersten Kommunikationsschnittstelle übertragen wird. Dabei wird insbesondere von einer Vertrauensbeziehung zwischen der Haupt-Kommunikationsschnittstelle und der jeweiligen Kommunikationsschnittstelle, wie beispielsweise der ersten Kommunikationsschnittstelle, ausgegangen.

Die Haupt-Kommunikationsschnittstelle ist insbesondere innerhalb des lokalen Systems angeordnet. Ferner umfasst das lokale System vorzugsweise zumindest eine weitere Kommunikationsschnittstelle aus der Anzahl K von Kommunikationsschnittstellen, wie die erste Kommunikationsschnittstelle, welche dem Server zugeordnet ist.

Auf dem Server ist die zumindest eine bestimmte Applikation angeordnet und/oder von diesem Server aus erreichbar. Der Server umfasst insbesondere eine Anzahl A von Applikationen, mit A ≥ 2, auf welche über den Server zumindest mittels der ersten Kommunikationsschnittstelle zugegriffen werden kann.

Der Ablauf dieser weiteren Ausführungsform wird insbesondere anhand des nachfolgenden Beispiels detaillierter erläutert:
Baut ein Benutzer eine Verbindung zu der ersten Kommunikationsschnittstelle innerhalb des lokalen Systems auf und liegt dort noch keine lokale Session für den ersten Account des Benutzers vor, wird der Benutzer automatisch an die erste Authentifizierungs-Einheit weitergeleitet, um eine lokale Session zu erstellen oder einer bestehenden lokalen Session beizutreten. Nach erfolgreicher Authentifizierung mittels des ersten Accounts und der ersten Anmeldeinformation des Benutzers nimmt die erste Kommunikationsschnittstelle sowie der erste Account des Benutzers anschließend an der lokalen Sitzung teil.

Infolgedessen ist der ersten Kommunikationsschnittstelle nun der erfolgreich authentifizierte erste Account des Benutzers bekannt. Anschließend wird versucht, für den ersten Account des Benutzers von der Haupt-Kommunikationsschnittstelle einen Berechtigungsnachweis für die Authentifizierung an der zweiten Authentifizierungs-Einheit des externen Systems zu erhalten.

Wenn kein Berechtigungsnachweis vorhanden ist, hat sich der Benutzer zuerst an der zweiten Authentifizierungs-Einheit zu authentifizieren, um dann den Berechtigungsnachweis nach einer erfolgreichen Authentifizierung mittels des zweiten Accounts und der zweiten Anmeldeinformation zu erhalten.

Insbesondere wird der Berechtigungsnachweis in der Haupt-Kommunikationsschnittstelle gespeichert, damit beispielsweise die erste Kommunikationsschnittstelle oder weitere Kommunikationsschnittstellen für an dem lokalen System authentifizierte Benutzer zu einem späteren Zeitpunkt den Berechtigungsnachweis erhalten können.

Gemäß einer weiteren Ausführungsform weist die Anzahl K von Kommunikationsschnittstellen, mit K ≥ 3, eine Haupt-Kommunikationsschnittstelle, eine erste Kommunikationsschnittstelle und eine zweite Kommunikationsschnittstelle auf, wobei die erste und die zweite Kommunikationsschnittstelle mit der Haupt-Kommunikationsschnittstelle verbunden sind, wobei das externe System die Anzahl S von Servern, mit S ≥ 2, umfasst, wobei die erste Kommunikationsschnittstelle mit einem ersten Server aus der Anzahl S von Servern und die zweite Kommunikationsschnittstelle mit einem zweiten Server aus der Anzahl S von Server verbunden sind.

Hierbei ist insbesondere die Haupt-Kommunikationsschnittstelle extern zu jeder weiteren Kommunikationsschnittstelle, wie der ersten und der zweiten Kommunikationsschnittstelle ausgebildet und verwaltet und speichert die Berechtigungsnachweise für die jeweiligen Benutzer. Dies hat den Vorteil, dass keine tiefe Integration mit der ersten Authentifizierungs-Einheit des lokalen Systems benötigt wird, was wiederrum zu einer erhöhten Flexibilität der Haupt-Kommunikationsschnittstelle führt.

Ein weiterer Vorteil dieser Ausführungsform ist, dass bei der Anzahl K von Kommunikationsschnittstellen eine für jede Kommunikationsschnittstelle, wie die erste und/oder die zweite Kommunikationsschnittstelle, lokale und spezifische Verwaltung des Berechtigungsnachweises für den Benutzer oder die jeweiligen Benutzer entfällt. Infolgedessen wird keine Persistenz oder Speicherung des Berechtigungsnachweises auf der jeweiligen Kommunikationsschnittstelle benötigt, sondern ausschließlich auf der Haupt-Kommunikationsschnittstelle. Dies reduziert die Komplexität des lokalen Systems, vereinfacht die Verwaltung von Kommunikationsschnittstellen und erhöht die Sicherheit.

Ein weiterer Vorteil ist, dass der Berechtigungsnachweis verschlüsselt zwischen der Haupt-Kommunikationsschnittstelle und der ersten sowie der zweiten Kommunikationsschnittstelle übertragen wird. Dabei wird insbesondere von einer Vertrauensbeziehung zwischen der Haupt-Kommunikationsschnittstelle und der jeweiligen Kommunikationsschnittstelle, wie der ersten sowie der zweiten Kommunikationsschnittstelle, ausgegangen.

Besonders vorteilhaft ist weiterhin, dass eine Lastverteilung zwischen den jeweiligen Kommunikationsschnittstellen, wie beispielsweise der ersten und der zweiten Kommunikationsschnittstelle, dem zumindest einen Client und der Anzahl S von externen Servern stattfindet. Insbesondere wird die Last als eine Datenlast bezeichnet.
Die Lastverteilung ist insbesondere deshalb möglich, da es bei der Kommunikation zwischen der Anzahl S von externen Servern, dem zumindest einen Client und den K Kommunikationsschnittstellen überflüssig ist, dass alle Daten immer über eine einzige Kommunikationsschnittstelle übermittelt werden. Somit werden mittels Lastverteilung die zu übermittelnden Daten zwischen dem lokalen und dem externen System und/oder innerhalb der jeweiligen Systeme verteilt. Dies hat den Vorteil, dass die anderen Kommunikationsschnittstellen entlastet werden, was somit zu einer Verringerung der benötigen Ressourcen führt.

Dabei kann insbesondere die Lastverteilung statisch ausgebildet sein. Dies bedeutet, dass bestimmte Applikationen des externen Systems nur über bestimmte Kommunikationsschnittstellen, wie beispielsweise die erste oder die zweite Kommunikationsschnittstelle, erreichbar und zugreifbar sind.

Alternativ kann dabei die Lastverteilung vorzugsweise dynamisch ausgebildet sein. Dies bedeutet, dass die Datenlast dynamisch auf Regeln basiert, wie etwa der Auslastung und/oder der Verfügbarkeit der einzelnen Kommunikationsschnittstellen. Dabei leitet eine Lastverteilungs-Einheit Anfragen und/oder die zu verarbeiteten Daten an die jeweils geeignetste Kommunikationsschnittstelle weiter.

Gemäß einer weiteren Ausführungsform umfasst die die erste Authentifizierungs-Einheit die Haupt-Kommunikationsschnittstelle, wobei in dem Schritt d) der erzeugte Berechtigungsnachweis an die Haupt-Kommunikationsschnittstelle des lokalen Systems übermittelt und von der Haupt-Kommunikationsschnittstelle verwaltet wird.

Die Haupt-Kommunikationsschnittstelle ist insbesondere Bestandteil der ersten Authentifizierungs-Einheit des lokalen Systems.

Dies hat den Vorteil, dass die Haupt-Kommunikationsschnittstelle automatisch an der lokalen Session zwischen dem zumindest einen Client, der ersten und der zweiten Kommunikationsschnittstelle und der ersten Authentifizierungs-Einheit teilnimmt. Somit erhält die Haupt-Kommunikationsschnittstelle automatisch die Information über den gegenüber der ersten Authentifizierungs-Einheit authentifizierten Benutzer oder die Benutzer. Infolgedessen entfällt der Schritt des Übergebens der jeweiligen Benutzerinformation von der ersten Authentifizierungs-Einheit zu der jeweiligen Kommunikationsschnittstelle und/oder zu der Haupt-Kommunikationsschnittstelle.

Ein weiterer Vorteil ist, dass der Berechtigungsnachweis insbesondere bereits als Bestandteil eines Login-Claims direkt im Zuge der Anmeldung an der ersten Authentifizierungs-Einheit des lokalen Systems zu den jeweiligen Kommunikationsschnittstellen übertragen wird. Der Schritt des Übermittelns des Berechtigungsnachweises von der Haupt-Kommunikationsschnittstelle zu den jeweiligen Kommunikationsschnittstellen, wenn diese den Berechtigungsnachweis anfragen, entfällt somit.

Dies bedeutet insbesondere, dass sobald sich eine Kommunikationsschnittstelle erfolgreich an der ersten Authentifizierungs-Einheit authentifiziert hat, diese den Berechtigungsnachweis erhält, sofern dieser vorhanden ist, da dieser bei einem Claim-basierten System als Antwort auf die erfolgreiche Authentifizierung an der ersten Authentifizierungs-Einheit erhalten wird. Vorzugsweise ist hierbei der Berechtigungsnachweis spezifisch für die jeweilige Kommunikationsschnittstelle verschlüsselt.

Die Integration der Haupt-Kommunikationsschnittstelle in die erste Authentifizierungs-Einheit führt ferner in vorteilhafter Weise dazu, dass die Haupt-Kommunikationsschnittstelle dadurch dieselbe Verfügbarkeit und Ausfallsicherheit wie die erste Authentifizierungs-Einheit erhält. Ist die erste Authentifizierungs-Einheit beispielsweise redundant ausgelegt, gilt dies nun auch für die Haupt-Kommunikationsschnittstelle. Dies erhöht die Sicherheit des lokalen Systems und es gibt somit aufgrund der Redundanz keinen "Single Point of Failure" .
Zusätzlich werden durch eine Anwendung eines "Need-to-Know"-Prinzips Berechtigungsnachweise nur für den gerade angemeldeten Benutzer herausgegeben. Kommunikationsschnittstellen können hierbei vorzugsweise nicht für beliebige Benutzer Berechtigungsnachweise anfordern. Dies erhöht die Sicherheit.

Ein weiterer Vorteil dieser Ausführungsform ist, dass bei der Anzahl K von Kommunikationsschnittstellen eine für jede Kommunikationsschnittstelle, wie die ersten und/oder der zweiten Kommunikationsschnittstelle, lokale und spezifische Verwaltung des Berechtigungsnachweises für den Benutzer oder die jeweiligen Benutzer entfällt. Infolgedessen wird keine Persistenz oder Speicherung des Berechtigungsnachweises auf der jeweiligen Kommunikationsschnittstelle benötigt, sondern ausschließlich auf der Haupt-Kommunikationsschnittstelle. Dies reduziert die Komplexität des lokalen Systems, vereinfacht die Verwaltung von Kommunikationsschnittstellen und erhöht die Sicherheit.

Ein zusätzlicher Vorteil ist, dass der Berechtigungsnachweis verschlüsselt zwischen der Haupt-Kommunikationsschnittstelle und der ersten sowie der zweiten Kommunikationsschnittstelle übertragen wird. Dabei wird insbesondere von einer Vertrauensbeziehung zwischen der Haupt-Kommunikationsschnittstelle und der jeweiligen Kommunikationsschnittstelle, wie der ersten sowie der zweiten Kommunikationsschnittstelle, ausgegangen.
Besonders vorteilhaft ist weiterhin, dass eine Lastverteilung zwischen den jeweiligen Kommunikationsschnittstellen, wie beispielsweise der ersten und der zweiten Kommunikationsschnittstelle, dem zumindest einen Client und der Anzahl S von externen Servern, stattfindet.

Die Lastverteilung ist insbesondere deshalb möglich, da es bei der Kommunikation zwischen der Anzahl S von externen Servern, dem zumindest einen Client und den K Kommunikationsschnittstellen überflüssig ist, dass alle Daten immer über eine einzige Kommunikationsschnittstelle übermittelt werden. Somit werden mittels Lastverteilung die zu übermittelnden Daten zwischen dem lokalen und dem externen System und/oder innerhalb der jeweiligen Systeme verteilt. Dies hat den Vorteil, dass die anderen Kommunikationsschnittstellen entlastet werden, was somit zu einer Verringerung der benötigen Ressourcen führt. Ebenfalls umfasst hierbei die Lastverteilung die oben erwähnte statische und/oder dynamische Lastverteilung.

Gemäß einer weiteren Ausführungsform ist zumindest eine Kommunikationsschnittstelle aus den K Kommunikationsschnittstellen als ein Programmcode, als eine App auf einem Edge Device oder als ein Hardware-Gateway ausgebildet.

Insbesondere ist die zumindest eine Kommunikationsschnittstelle aus den K Kommunikationsschnittstellen als ein Programmcode in Form einer Software ausgebildet.

Das Edge Device weist vorzugsweise alle Funktionen der zumindest einen Kommunikationsschnittstelle auf und umfasst zwei Schnittstellen, einmal zu dem lokalen System und einmal einen Internet-Zugang für den Zugang oder Zugriff zu dem externen System.

Gemäß einem zweiten Aspekt wird ein Computerprogrammprodukt vorgeschlagen, welches auf zumindest einer programmgesteuerten Einrichtung die Durchführung des wie oben erläuterten Verfahrens veranlasst.

Insbesondere umfasst die programmgesteuerte Einrichtung eine Anzahl von verteilten programmgesteuerten oder computerimplementierten Einrichtungen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird eine Vorrichtung zum Verarbeiten von Daten eines lokalen Systems umfassend eine Anzahl K von Kommunikationsschnittstellen und eines externen Systems umfassend eine Anzahl S von Servern und eine Anzahl A von Applikationen vorgeschlagen, wobei jede der A Applikationen mittels eines der S Server bereitgestellt wird und jede der K Kommunikationsschnittstellen einem der S Server zugeordnet ist, mit K ≥ 1, S ≥ 1, A ≥ 1. Die Vorrichtung umfasst:
eine erste Authentifizierungs-Einheit zum Anmelden an dem lokalen System unter Verwendung einer ersten Anmeldeinformation eines ersten Accounts eines Benutzers,
eine zweite Authentifizierungs-Einheit zum Anmelden an dem externen System unter Verwendung einer zweiten Anmeldeinformation eines zweiten Accounts des Benutzers,
eine Erzeugungs-Einheit zum Erzeugen eines Berechtigungsnachweises für den zweiten Account des Benutzers in Abhängigkeit des Anmeldens an der zweiten Authentifizierungs-Einheit,
eine Übermittlungs-Einheit zum Übermitteln des erzeugten Berechtigungsnachweises an das lokale System,
eine Kopplungs-Einheit zum Koppeln des übermittelten Berechtigungsnachweises mit dem ersten Account des Benutzers, und
eine Zugriffs-Einheit zum Zugreifen, nach einem erneuten Anmelden an dem lokalen System mittels der ersten Authentifizierungs-Einheit unter Verwendung der ersten Anmeldeinformation des ersten Accounts, auf eine bestimmte Applikation aus den A Applikationen des externen Systems über den die bestimmte Applikation bereitstellenden Server und über die dem Server zugeordnete Kommunikationsschnittstelle unter Verwendung des mit dem ersten Account des Benutzers gekoppelten Berechtigungsnachweises.

Die jeweilige Einheit, zum Beispiel die Kopplungs-Einheit oder die Zugriffs-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem vierten Aspekt wird eine Anordnung mit einer wie oben erläuterten Vorrichtung vorgeschlagen, wobei das lokale System als eine Industrieanlage, das externe System als eine Cloud und die zumindest eine Kommunikationsschnittstelle aus den K Kommunikationsschnittstellen als ein Proxy ausgebildet sind.

Die für das vorgeschlagene Verfahren beschriebenen Ausführungsformen und Merkmale gelten für die vorgeschlagene Vorrichtung entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Ablaufdiagramm eines Ausführungsbeispiels eines Verfahrens zum Verarbeiten von Daten;
- Fig. 2: zeigt ein schematisches Blockdiagramm eines ersten Ausführungsbeispiels einer Vorrichtung zum Verarbeiten von Daten;
- Fig. 3: zeigt ein schematisches Blockdiagramm eines zweiten Ausführungsbeispiels einer Vorrichtung zum Verarbeiten von Daten; und
- Fig. 4: zeigt ein schematisches Blockdiagramm eines dritten Ausführungsbeispiels einer Vorrichtung zum Verarbeiten von Daten.

In den Figuren sind gleiche oder funktionsgleiche Elemente mit denselben Bezugszeichen versehen worden, sofern nichts anderes angegeben ist.

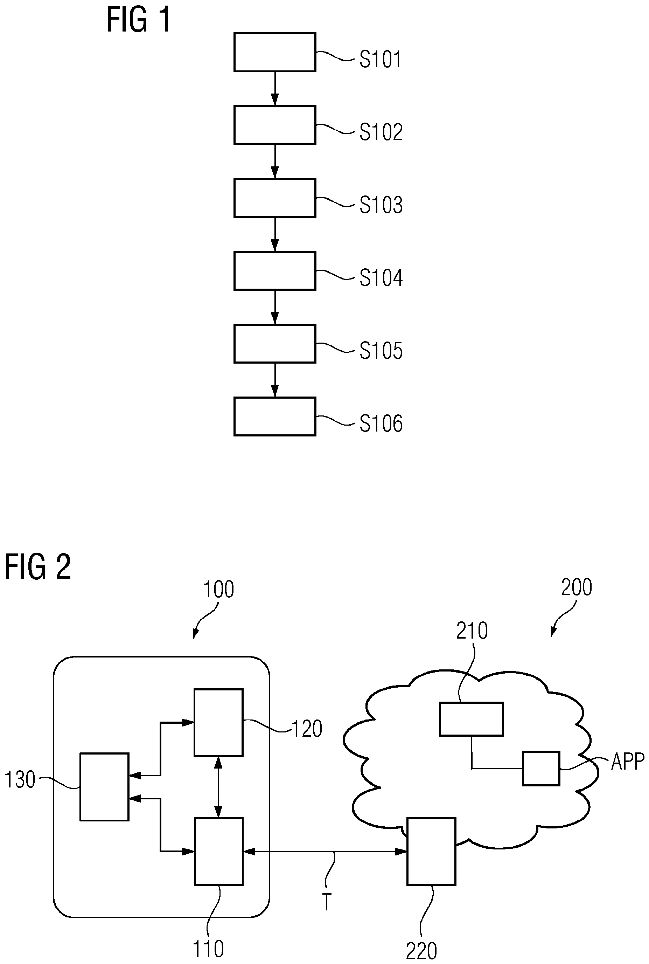

Fig. 1 zeigt ein schematisches Ablaufdiagramm eines Ausführungsbeispiels eines Verfahrens zum Verarbeiten von Daten, welches im Folgenden auch unter Bezugnahme auf die Fig. 2 erläutert wird.

Dabei werden insbesondere Daten bei einem in der Fig. 2 dargestellten lokalen System 100 und einem externen System 200 verarbeitet. Das lokale System 100 der Fig. 2 umfasst eine Anzahl K von Kommunikationsschnittstellen 110, mit K ≥ 1. Weiterhin weist das externe System 200 der Fig. 2 eine Anzahl S von Servern 210 und eine Anzahl A von Applikationen APP auf, mit S ≥ 1, A ≥ 1. Ohne Einschränkung der Allgemeinheit sind in Fig. 2 K = 1, S = 1 und A = 1. Jede der A Applikationen APP wird mittels einem der S Server 210 bereitgestellt sowie jede der K Kommunikationsschnittstellen 110 ist einem der S Server 210 zugeordnet. Zudem kann ein Benutzer über zumindest einen Client 130 mit einer ersten Authentifizierungs-Einheit 120 und der Kommunikationsschnittstelle 110 aus der Anzahl K von Kommunikationsschnittstellen 110 kommunizieren.

Das erste Ausführungsbeispiel der Fig. 1 weist die folgenden Verfahrensschritte S101 bis S106 auf:
In dem Schritt S101 wird eine Anmeldung an dem lokalen System 100 mittels der ersten Authentifizierungs-Einheit 120 unter Verwendung einer ersten Anmeldeinformation eines ersten Accounts des Benutzers durchgeführt.

In dem Schritt S102 wird eine Anmeldung an dem externen System 200 mittels einer zweiten Authentifizierungs-Einheit 220 unter Verwendung einer zweiten Anmeldeinformation eines zweiten Accounts des Benutzers ausgeführt.

Weiter wird in dem Schritt S103 ein Berechtigungsnachweis T für den zweiten Account des Benutzers in Abhängigkeit des Anmeldens an der zweiten Authentifizierungs-Einheit 220 erzeugt.

Der Berechtigungsnachweis T bekommt insbesondere beim Erzeugen durch die zweite Authentifizierungs-Einheit 220 eine befristete oder eine unbefristete Gültigkeitsdauer zugewiesen. Weiterhin kann der erzeugte Berechtigungsnachweis T zusätzlich einem weiteren Account eines weiteren Benutzers zugewiesen werden. Auch wird der Berechtigungsnachweis T spezifisch für den zweiten Account des Benutzers erzeugt und wird zumindest einem bestimmten Verwendungszweck zugeordnet.

Als nächstes wird in dem Schritt S104 der erzeugte Berechtigungsnachweis T an das lokale System 100 übermittelt.

In dem Schritt S105 wird der übermittelte Berechtigungsnachweis T mit dem ersten Account des Benutzers gekoppelt.

Dabei umfasst das Koppeln in dem Schritt S105 eine Zuweisung von einer Anzahl Z von Zugriffsrechten, mit Z ≥ 1, für den ersten Account des Benutzers mittels des übermittelten Berechtigungsnachweises T. Die erzeugte Kopplung in Schritt S105 kann zu einem von dem Benutzer gewählten Zeitpunkt aufgelöst werden.

In dem Schritt S106 wird eine erneute Anmeldung an dem lokalen System 100 mittels der ersten Authentifizierungs-Einheit 120 unter Verwendung der ersten Anmeldeinformation des ersten Accounts durchgeführt. Ferner wird ein Zugreifen auf eine bestimmte Applikation APP aus den A Applikationen des externen Systems 200 über den die bestimmte Applikation bereitstellenden Server 210 und über die dem Server 210 zugeordnete Kommunikationsschnittstelle 110 unter Verwendung des mit dem ersten Account des Benutzers gekoppelten Berechtigungsnachweises T vollzogen.

Fig. 2 zeigt ein schematisches Blockdiagramm eines ersten Ausführungsbeispiels einer Vorrichtung zum Verarbeiten von Daten.

Vorzugsweise dient die Vorrichtung zum Verarbeiten von Daten des lokalen und des externen Systems 100, 200, welches die wie oben bereits unter Fig. 1 erläuterten Einrichtungen umfasst.
Das lokale System 100 weist die erste Authentifizierungs-Einheit 120 und eine Kopplungs-Einheit 110 auf.

Das externe System 200 weist die zweite Authentifizierungs-Einheit 220, zumindest den Server 210 und zumindest die bestimmte Applikation APP auf. Zudem ist die zweite Authentifizierungs-Einheit 220 insbesondere als eine Erzeugungs-Einheit und als eine Übermittlungs-Einheit ausgebildet.

Die erste Authentifizierungs-Einheit 120 ist zum Anmelden an dem lokalen System 100 unter Verwendung der ersten Anmeldeinformation des ersten Accounts des Benutzers eingerichtet.

Ferner ist die Kopplungs-Einheit 110 dazu eingerichtet, den übermittelten Berechtigungsnachweis T mit dem ersten Account des Benutzers zu koppeln. Die Kopplungs-Einheit 110 ist beispielsweise eine Kommunikationsschnittstelle aus der Anzahl K von Kommunikationsschnittstellen. Dabei sind die erste Authentifizierungs-Einheit 120 und die zweite Authentifizierungs-Einheit 220 über zumindest die eine der K Kommunikationsschnittstellen gekoppelt.

Zusätzlich ist zumindest eine Kommunikationsschnittstelle 110 aus den K Kommunikationsschnittstellen als ein Programmcode, als eine App auf einem Edge Device oder als ein Hardware-Gateway ausgebildet.

Des Weiteren ist die zweite Authentifizierungs-Einheit 220 zum Anmelden an dem externen System 200 unter Verwendung der zweiten Anmeldeinformation des zweiten Accounts des Benutzers eingerichtet. Außerdem sind die erste Authentifizierungs-Einheit 120 und die zweite Authentifizierungs-Einheit 220 voneinander unabhängig ausgebildet.

Die Erzeugungs-Einheit 220 ist dazu eingerichtet, den Berechtigungsnachweis T für den zweiten Account des Benutzers in Abhängigkeit des Anmeldens an der zweiten Authentifizierungs-Einheit 120 zu erzeugen.

Die Übermittlungs-Einheit 220 ist dazu eingerichtet, den erzeugten Berechtigungsnachweis T an das lokale System 100 zu übermitteln.

Ferner ist die Zugriffs-Einheit 110 zum Zugreifen, nach einem erneuten Anmelden an dem lokalen System 100 mittels der ersten Authentifizierungs-Einheit 120 unter Verwendung der ersten Anmeldeinformation des ersten Accounts, auf die bestimmte Applikation APP aus den A Applikationen des externen Systems 200 über den die bestimmte Applikation APP bereitstellenden Server 210 und über die dem Server 210 zugeordnete Kommunikationsschnittstelle 110 unter Verwendung des mit dem ersten Account des Benutzers gekoppelten Berechtigungsnachweises T eingerichtet.

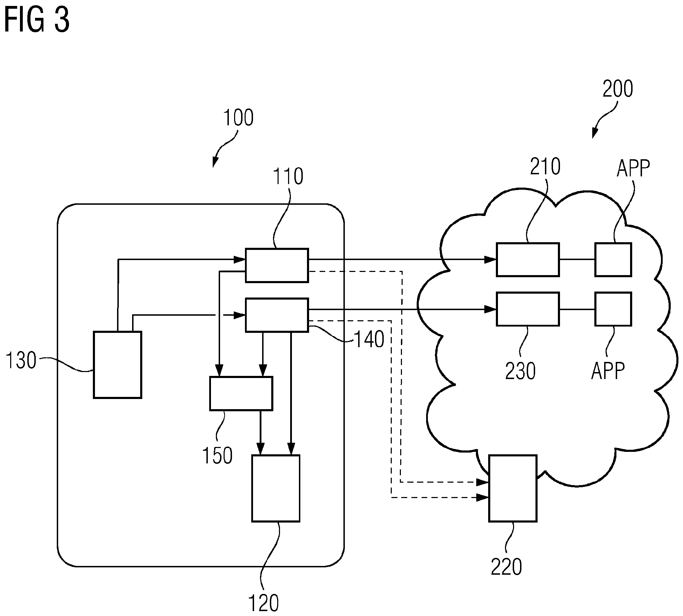

Mit anderen Worten zeigt die Fig. 2 eine Anordnung, welche das lokale System 100 und das externe System 200 umfasst. Hierbei ist das lokale System 100 als eine Industrieanlage und das externe System 200 als eine Cloud ausgebildet. Zudem ist die zumindest eine Kommunikationsschnittstelle 110 aus den K Kommunikationsschnittstellen als ein Proxy ausgebildet. Fig. 3 zeigt ein schematisches Blockdiagramm eines zweiten Ausführungsbeispiels einer Vorrichtung zum Verarbeiten von Daten. Vorzugsweise dient die Vorrichtung zum Verarbeiten von Daten des lokalen und des externen Systems 100, 200. Das lokale und externe System 100, 200 umfasst zumindest die in Fig. 2 erläuterten Einrichtungen.

In Fig. 3 weist die Anzahl K von Kommunikationsschnittstellen, mit K ≥ 3, eine Haupt-Kommunikationsschnittstelle 150, eine mit der Haupt-Kommunikationsschnittstelle 150 verbundene erste Kommunikationsschnittstelle 110 und eine mit der Haupt-Kommunikationsschnittstelle 150 verbundene zweite Kommunikationsschnittstelle 140 auf.

Die Haupt-Kommunikationsschnittstelle 150 des lokalen Systems 100 verwaltet dabei insbesondere den zu der Haupt-Kommunikationsschnittstelle 150 übermittelten Berechtigungsnachweis T und stellt diesen der ersten und der zweiten Kommunikationsschnittstelle 110, 140 bereit.

In Fig. 3 umfasst das externe System 200 die Anzahl S von Servern, mit S ≥ 2. Dabei ist die erste Kommunikationsschnittstelle 110 mit einem ersten Server 210 verbunden, während die zweite Kommunikationsschnittstelle 140 mit einem zweiten Server 230 verbunden ist. Über den Server 210 greift die erste Kommunikationsschnittstelle 110 auf die dem Server 210 zugeordnete Applikation APP zu. Über den Server 230 greift die zweite Kommunikationsschnittstelle 140 auf die dem Server 230 zugeordnete Applikation APP zu.

Die erste Authentifizierungs-Einheit 120 ist hierbei zum Anmelden an dem lokalen System 100 unter Verwendung der ersten Anmeldeinformation des ersten Accounts des Benutzers eingerichtet. Des Weiteren ist die zweite Authentifizierungs-Einheit 220 zum Anmelden an dem externen System 200 unter Verwendung der zweiten Anmeldeinformation des zweiten Accounts des Benutzers eingerichtet.

Die Haupt-Kommunikationsschnittstelle 150 ist hierbei insbesondere als die Kopplungs-Einheit ausgebildet und ist dazu eingerichtet, den übermittelten Berechtigungsnachweis T mit dem ersten Account des Benutzers zu koppeln. Dabei sind die erste Authentifizierungs-Einheit 120 und die zweite Authentifizierungs-Einheit 220 über zumindest die Haupt-Kommunikationsschnittstelle 150 gekoppelt.

Die Erzeugungs-Einheit 220 ist dazu eingerichtet, den Berechtigungsnachweis T für den zweiten Account des Benutzers in Abhängigkeit des Anmeldens an der zweiten Authentifizierungs-Einheit 120 zu erzeugen. Die Übermittlungs-Einheit 220 ist dazu eingerichtet, den erzeugten Berechtigungsnachweis T an das lokale System 100 zu übermitteln.

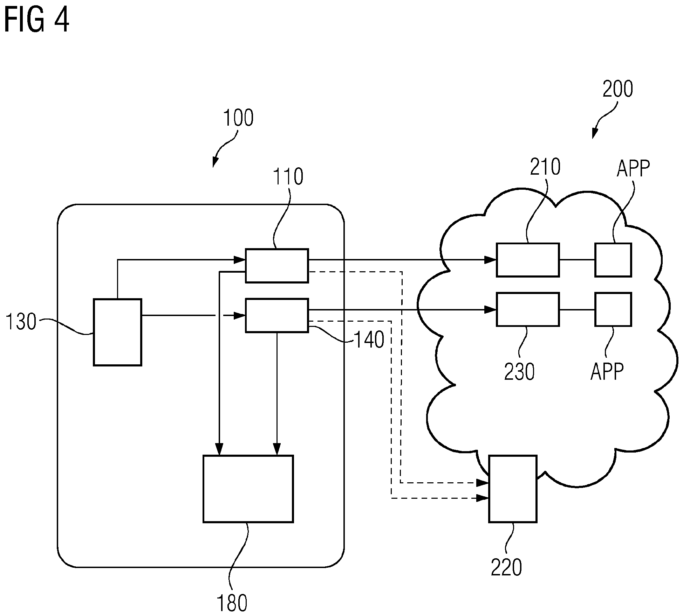

Fig. 4 zeigt ein schematisches Blockdiagramm eines dritten Ausführungsbeispiels einer Vorrichtung zum Verarbeiten von Daten. Vorzugsweise dient die Vorrichtung zum Verarbeiten von Daten des lokalen und des externen Systems 100, 200, wie es in Fig. 3 bereits dargestellt ist.

Im Gegensatz zu Fig. 3 umfasst in Fig. 4 die erste Authentifizierungs-Einheit 120 in dem lokalen System 100 die Haupt-Kommunikationsschnittstelle 150. Dies ist als ein Funktionsblock mit dem Bezugszeichen 180 in Fig. 4 dargestellt. Somit umfasst in Fig. 4 der Funktionsblock 180 die Funktionalität der Kombination aus der ersten Authentifizierungs-Einheit 120 und der Haupt-Kommunikationsschnittstelle 150. Die Funktionalität der einzelnen Einrichtungen, wie der ersten und der zweiten Kommunikationsschnittstelle 110, 140, dem ersten und dem zweiten Servern 210, 230 et. cetera, entspricht denen aus Fig. 3.

Obwohl die vorliegende Erfindung anhand von Ausführungsbeispielen beschrieben wurde, ist sie vielfältig modifizierbar.

## Patentansprüche

1. Verfahren zum Verarbeiten von Daten eines lokalen Systems (100) umfassend eine Anzahl K von Kommunikationsschnittstellen (110, 140, 150, 180) und eines externen Systems (200) umfassend eine Anzahl S von Servern (210, 230) und eine Anzahl A von Applikationen (APP), wobei jede der A Applikationen (APP) mittels eines der S Server (210, 230) bereitgestellt wird und jede der K Kommunikationsschnittstellen (110, 140, 150, 180) einem der S Server (210, 230) zugeordnet ist, mit K ≥ 1, S ≥ 1, A ≥ 1, mit den Schritten:
a) Anmelden an dem lokalen System (100) mittels einer ersten Authentifizierungs-Einheit (120, 180) unter Verwendung einer ersten Anmeldeinformation eines ersten Accounts eines Benutzers,
b) Anmelden an dem externen System (200) mittels einer zweiten Authentifizierungs-Einheit (220) unter Verwendung einer zweiten Anmeldeinformation eines zweiten Accounts des Benutzers,
c) Erzeugen eines Berechtigungsnachweises (T) für den zweiten Account des Benutzers in Abhängigkeit des Anmeldens an der zweiten Authentifizierungs-Einheit (220),
d) Übermitteln des erzeugten Berechtigungsnachweises (T) an das lokale System (100),
e) Koppeln des übermittelten Berechtigungsnachweises (T) mit dem ersten Account des Benutzers, und
f) Erneutes Anmelden an dem lokalen System (100) mittels der ersten Authentifizierungs-Einheit (120, 180) unter Verwendung der ersten Anmeldeinformation des ersten Accounts und Zugreifen auf eine bestimmte Applikation (APP) aus den A Applikationen (APP) des externen Systems (200) über den die bestimmte Applikation (APP) bereitstellenden Server (210, 230) und über die dem Server (210, 230) zugeordnete Kommunikationsschnittstelle (110, 140, 150, 180) unter Verwendung des mit dem ersten Account des Benutzers gekoppelten Berechtigungsnachweises (T) .

2. Verfahren nach Anspruch 1,
**dadurch gekennzeichnet,**
**dass** die erste Authentifizierungs-Einheit (120, 180) und die zweite Authentifizierungs-Einheit (220) voneinander unabhängig ausgebildet sind.

3. Verfahren nach Anspruch 1 oder 2,
**dadurch gekennzeichnet,**
**dass** die erste Authentifizierungs-Einheit (120, 180) und die zweite Authentifizierungs-Einheit (220) über zumindest eine der K Kommunikationsschnittstellen (110, 140, 150, 180) gekoppelt sind.

4. Verfahren nach einem der Ansprüche 1 bis 3,
**dadurch gekennzeichnet,**
**dass** das Koppeln in Schritt e) eine Zuweisung von einer Anzahl Z von Zugriffsrechten, mit Z ≥ 1, für den ersten Account des Benutzers mittels des übermittelten Berechtigungsnachweises (T) umfasst.

5. Verfahren nach einem der Ansprüche 1 bis 4,
**dadurch gekennzeichnet,**
**dass** dem Berechtigungsnachweis (T) eine befristete oder eine unbefristete Gültigkeitsdauer beim Erzeugen durch die zweite Authentifizierungs-Einheit (220) zugewiesen wird.

6. Verfahren nach einem der Ansprüche 1 bis 5,
**dadurch gekennzeichnet,**
**dass** der erzeugte Berechtigungsnachweis (T) zusätzlich einem weiteren Account eines weiteren Benutzers zugewiesen wird.

7. Verfahren nach einem der Ansprüche 1 bis 6,
**dadurch gekennzeichnet,**
**dass** der Berechtigungsnachweis (T) spezifisch für den zweiten Account des Benutzers erzeugt wird und zumindest einem bestimmten Verwendungszweck zugeordnet wird.

8. Verfahren nach einem der Ansprüche 1 bis 7,
**dadurch gekennzeichnet,**
**dass** die Kopplung des übermittelten Berechtigungsnachweises (T) mit dem ersten Account des Benutzers zu einem von dem Benutzer gewählten Zeitpunkt aufgelöst wird.

9. Verfahren nach einem der Ansprüche 1 bis 8,
**dadurch gekennzeichnet,**
**dass** die Anzahl K von Kommunikationsschnittstellen (110, 140, 150, 180), mit K ≥ 2, eine Haupt-Kommunikationsschnittstelle (150, 180) und eine mit der Haupt-Kommunikationsschnittstelle (150, 180) verbundene weitere Kommunikationsschnittstelle (110, 140) aufweist, wobei in dem Schritt d) der erzeugte Berechtigungsnachweis (T) an die Haupt-Kommunikationsschnittstelle (150, 180) des lokalen Systems (100) übermittelt und von der Haupt-Kommunikationsschnittstelle (150, 180) verwaltet wird, wobei die in dem Schritt f) dem Server (210, 230) zugeordnete Kommunikationsschnittstelle (110, 140, 150, 180) die erste Kommunikationsschnittstelle (110) umfasst, wobei der ersten Kommunikationsschnittstelle (110) der erzeugte Berechtigungsnachweis (T) über die Haupt-Kommunikationsschnittstelle (150, 180) bereitgestellt wird und der erzeugte Berechtigungsnachweis (T) von der ersten Kommunikationsschnittstelle (110) benutzt wird.

10. Verfahren nach einem der Ansprüche 1 bis 8,
**dadurch gekennzeichnet,**
**dass** die Anzahl K von Kommunikationsschnittstellen (110, 140, 150, 180), mit K ≥ 3, eine Haupt-Kommunikationsschnittstelle (150, 180), eine erste Kommunikationsschnittstelle (110) und eine zweite Kommunikationsschnittstelle (140) aufweist, wobei die erste und die zweite Kommunikationsschnittstelle (110, 140) mit der Haupt-Kommunikationsschnittstelle (150, 180) verbunden sind, wobei das externe System (200) die Anzahl S von Servern (210, 230), mit S ≥ 2, umfasst, wobei die erste Kommunikationsschnittstelle (110) mit einem ersten Server (210) aus der Anzahl S von Servern (210, 230) und die zweite Kommunikationsschnittstelle (140) mit einem zweiten Server (230) aus der Anzahl S von Server (210, 230) verbunden sind.

11. Verfahren nach Anspruch 10,
**dadurch gekennzeichnet,**
**dass** die erste Authentifizierungs-Einheit (120, 180) die Haupt-Kommunikationsschnittstelle (150, 180) umfasst, wobei in dem Schritt d) der erzeugte Berechtigungsnachweis (T) an die Haupt-Kommunikationsschnittstelle (150, 180) des lokalen Systems (100) übermittelt und von der Haupt-Kommunikationsschnittstelle (150, 180) verwaltet wird.

12. Verfahren nach einem der Ansprüche 1 bis 11,
**dadurch gekennzeichnet,**
**dass** zumindest eine Kommunikationsschnittstelle (110, 140, 150, 180) aus den K Kommunikationsschnittstellen (110, 140, 150, 180) als ein Programmcode, als eine App auf einem Edge Device oder als ein Hardware-Gateway ausgebildet ist.

13. Computerprogrammprodukt, welches auf zumindest einer programmgesteuerten Einrichtung die Durchführung des Verfahrens nach einem der Ansprüche 1 bis 12 veranlasst.

14. Vorrichtung zum Verarbeiten von Daten eines lokalen Systems (100) umfassend eine Anzahl K von Kommunikationsschnittstellen (110, 140, 150, 180) und eines externen Systems (200) umfassend eine Anzahl S von Servern (210, 230) und eine Anzahl A von Applikationen (APP), wobei jede der A Applikationen (APP) mittels eines der S Server (210, 230) bereitgestellt wird und jede der K Kommunikationsschnittstellen (110, 140, 150, 180) einem der S Server (210, 230) zugeordnet ist, mit K ≥ 1, S ≥ 1, A ≥ 1, mit:
einer ersten Authentifizierungs-Einheit (120, 180) zum Anmelden an dem lokalen System (100) unter Verwendung einer ersten Anmeldeinformation eines ersten Accounts eines Benutzers,
einer zweiten Authentifizierungs-Einheit (220) zum Anmelden an dem externen System (200) unter Verwendung einer zweiten Anmeldeinformation eines zweiten Accounts des Benutzers,
einer Erzeugungs-Einheit (220) zum Erzeugen eines Berechtigungsnachweises (T) für den zweiten Account des Benutzers in Abhängigkeit des Anmeldens an der zweiten Authentifizierungs-Einheit (120),
einer Übermittlungs-Einheit (220) zum Übermitteln des erzeugten Berechtigungsnachweises (T) an das lokale System (100),
einer Kopplungs-Einheit (110, 150, 180) zum Koppeln des übermittelten Berechtigungsnachweises (T) mit dem ersten Account des Benutzers, und
einer Zugriffs-Einheit (110, 140) zum Zugreifen, nach einem erneuten Anmelden an dem lokalen System (100) mittels der ersten Authentifizierungs-Einheit (120, 180) unter Verwendung der ersten Anmeldeinformation des ersten Accounts, auf eine bestimmte Applikation (APP) aus den A Applikationen (APP) des externen Systems (200) über den die bestimmte Applikation (APP) bereitstellenden Server (210, 230) und über die dem Server (210, 230) zugeordnete Kommunikationsschnittstelle (110, 140, 150, 180) unter Verwendung des mit dem ersten Account des Benutzers gekoppelten Berechtigungsnachweises (T).

15. Anordnung mit einer Vorrichtung nach Anspruch 14, wobei das lokale System (100) als eine Industrieanlage, das externe System (200) als eine Cloud und die zumindest eine Kommunikationsschnittstelle (110, 140, 150, 180) aus den K Kommunikationsschnittstellen (110, 140, 150, 180) als ein Proxy ausgebildet sind.
